# EUROPEAN PATENT APPLICATION

(11) **EP 4 468 469 A1**
(43) Date of publication of application: **27.11.2024**
(21) Application number: 24175164.3
(22) Date of filing: 10.05.2024
(51) Int. Cl.: H01M 50/105, H01M 10/613, H01M 10/625, H01M 10/647, H01M 10/6555, H01M 50/211

(54) **COMPOSITE BATTERY ASSEMBLY STRUCTURE**

(30) Priority: 26.05.2023 TW 112119638
(71) Applicant: Prologium Technology Co., Ltd., Taoyuan City (TW)
(72) Inventor: LEE, Cheng-Chih, Taoyuan City (TW); WU, Meng-Hung, Taoyuan City (TW); TSAI, Pei-Hsiu, Taoyuan City (TW)
(74) Representative: Cabinet Chaillot

(57) **Abstract**

The invention provides a composite battery assembly structure. The heat dissipating sheets are disposed between the battery cells for support and protection. In addition to providing structural strength, the heat dissipating sheets made of high thermal conductivity material could significantly enhance the heat dissipation effect. Also, the heat dissipating sheets are connected to each other by the fixing tabs and the fixing notches. With such arrangement, the heat dissipating sheets could be easily fixed to each other. By enabling a lightweight and compact design, the invention could increase the energy density of the composite battery assembly structure on a per unit weight and per unit volume basis.

## Description

### CROSS REFERENCES TO RELATED APPLICATIONS

The present application claims priority to Taiwanese Patent Application 112119638 filed in the Taiwanese Patent Office on May 26, 2023, the entire contents of which is being incorporated herein by reference.

### Field of Invention

The present invention relates to a battery assembly structure, in particular to a composite battery assembly structure with high thermal conductivity, high structural strength and high assembly efficiency.

### Related Art

New energy vehicles are gradually being promoted and applied in the market. The power batteries are one of the three core technologies of new energy electric vehicles. Therefore, the structural protection and thermal management of the power batteries are considered as a very important part of the new energy vehicles. With the widespread use of the power batteries, the lightweight is required for the new energy vehicle manufacturers to increase cruising range for the new energy vehicle. It is expected to extend the cruising range as much as possible with limited space and power capacity, so that the expansion of new energy vehicles can be smoother.

The soft-packed power batteries have the inherent benefits, which is different from the common hard packaging. The soft film materials such as aluminum-plastic film is used to encapsulate the internal battery cells or batteries. Because the package material is the soft film materials, the total weight and occupied spaces are decreased. Therefore, its energy density per unit volume or unit weight is increased. Such structure is quite suitable as a power battery for the new energy vehicles.

However, the soft-packed structure will reduce the structural strength of the overall battery module due to the soft film material characteristics. In addition, its higher energy density will lead to the heat accumulation in per unit space. Therefore, in the existing soft pack battery modules, the strengthen mechanism and heat dissipation mechanism are added. However, this will deplete its lightweight characteristics and lose its inherent benefits.

To solve above-mentioned problems, the prior application, China patent publication No. CN 109671886, discloses a soft-pack battery module structure that enhances heat transfer. A cell holder with specific structure is used to cooperate with upper and lower case modules to achieve support and heat dissipation. Therefore, the heat dissipation and structural support of the soft pack battery pack are improved. However, its structure is too complicated, especially the cell bracket. It is difficult to manufacture due to the complicated structure, and is inconvenient to assemble. Also, US patent publication No. US 2020274211 discloses a battery and the battery pack. The first thermally conductive components are arranged and contacted to the surfaces of each cell and the second thermally conductive components constituting to clamp thereof. Therefore, the heat dissipation efficiency is enhanced. However, due to the connections between the first thermally conductive components are not firm, the support strength of the battery pack would not be enhanced. The second thermally conductive components must be used to clamp thereof. Therefore, the total weight of the battery pack will be increased and the complexity of assembly is increased.

Therefore, this invention provides a composite battery assembly structure to mitigate or obviate the aforementioned problems.

### SUMMARY OF THE INVENTION

It is an objective of this invention to provide a brand new composite battery assembly structure. The heat dissipating sheets are arranged at intervals between the battery cells to enhance the heat dissipation effect and further to improve the efficiency of thermal management.

Also, it is another objective of this invention to a composite battery assembly structure. The heat dissipating sheet has a simple structure and is easy to manufacture and assemble. Also, it is light in weight and is occupies a smaller space. The strength of the clamping is higher. Therefore, the overall composite battery assembly structure has a very high structural support strength with a higher energy density.

In order to implement the abovementioned, this invention discloses a composite battery assembly structure, which includes a plurality of battery cells and a plurality of heat dissipating sheets. At least one battery cell is disposed between two adjacent heat dissipating sheets. Each heat dissipating sheet includes a heat dissipating body, two connecting portions, a plurality of fixing tabs and a plurality of fixing notches. The heat dissipating body directly contacts to one of the battery cell to achieve heat dissipation. The two connecting portions are extended in the same direction from two opposite sides of the heat dissipating body. The fixing tabs are extended from an end of the connecting portions, and the fixing notches are disposed at a junction of the heat dissipating body and the connecting portions. The fixing tab includes a fixing tab neck and a fixing tab head connected to the fixing tab neck. The fixing notch includes a fixing notch neck and a fixing notch head connected to the fixing notch neck, which are corresponding to the fixing tab neck and a fixing tab head of the fixing tabs respectively. Two adjacent heat dissipating sheets are connected to each other by the fixing tabs and the fixing notches. Therefore, the two adjacent heat dissipating sheets are firmly fixed to provide structural support. The physical structural strength of the overall battery assembly structure is improved.

Moreover, because the heat dissipating sheet is small in size, light in weight, and easy to assemble, the manufacturing costs and assembly costs can be reduced and fairly high energy density can be maintained.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 is a schematic diagram of the embodiment of the heat dissipating sheets of the composite battery assembly structure of this invention.
FIG. 2 is an exploded view of the embodiment of the heat dissipating sheets and the battery cell of the composite battery assembly structure of this invention.
FIG. 3 is a schematic diagram of the embodiment of the heat dissipating sheets and the battery cell of the composite battery assembly structure of this invention.
FIG. 4 is a schematic diagram of the another embodiment of the heat dissipating sheets and the battery cell of the composite battery assembly structure of this invention.
FIG. 5 is a schematic diagram of the embodiment of the composite battery assembly structure of this invention.
FIGS. 6A-7D are schematic diagrams of the embodiments of the fixing tabs and the fixing notches of the composite battery assembly structure of this invention.

### DETAILED DESCRIPTION OF THE INVENTION

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn on scale for illustrative purposes.

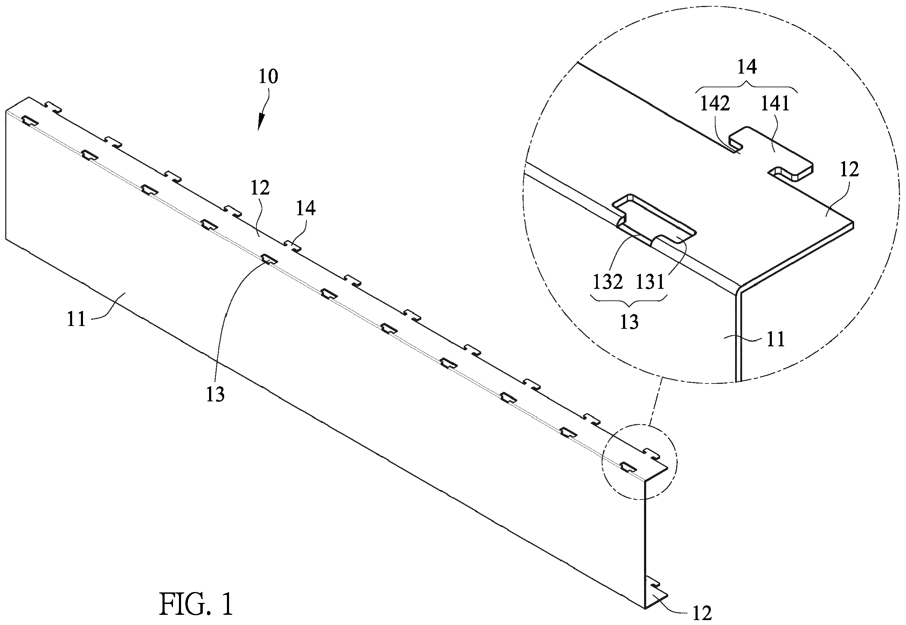

Please refer to FIG. 1, which is a schematic diagram of the embodiment of the heat dissipating sheets of the composite battery assembly structure of this invention. The heat dissipating sheet 10 includes a heat dissipating body 11, which is thin plate-shaped sheet and made of high thermal conductivity metals. Two connecting portions 12 are extended in the same direction from two opposite sides of the heat dissipating body 11. The two connecting portions 12 are substantially parallel to each other and substantially perpendicular to the heat dissipating body 11. Therefore, the heat dissipating sheet 10 is in U-shaped and forms an accommodation space therebetween. Also, the extended sizes of the connecting portions 12 are depended on the amount of battery cells required for subsequent installation in the accommodation space. The detailed description is presented below.

The fixing tabs 14 are extended from an end, the free end, of the connecting portions 12, and the fixing notches 13 are disposed at a junction of the heat dissipating body 11 and the connecting portions 12. The fixing tab 14 includes a fixing tab neck 142 and a fixing tab head 141 connected to the fixing tab neck 142. The fixing notch 13 includes a fixing notch neck 132 and a fixing notch head 131 connected to the fixing notch neck 132, which are corresponding to the fixing tab neck 142 and a fixing tab head 141 of the fixing tabs 14 respectively. As shown in the figure, the fixing tab head 141 is connected to the connecting portion 12 via the fixing tab neck 142 with a smaller width. The fixing notch 13 has a similar shape corresponding to the fixing tab 14, and the fixing notch neck 132 has a smaller width than the fixing notch head 131. Therefore, two adjacent heat dissipating sheets 10 can be clamped and fixed firmly to each other via the fixing tabs 14 to fix to the adjacent fixing notch 13. The detailed description is also presented below. The fixing tabs 14 do not necessarily all have the same shape, size or spacing. It can be adjusted according to the requirements. For example, the shape and size of the fixing tabs 14 are modified for positioning or limiting the installation direction. Furthermore, the heat dissipating sheet 10 may be made of a highly thermally conductive metal, and can be formed, but not limited to, by the most common pressing process.

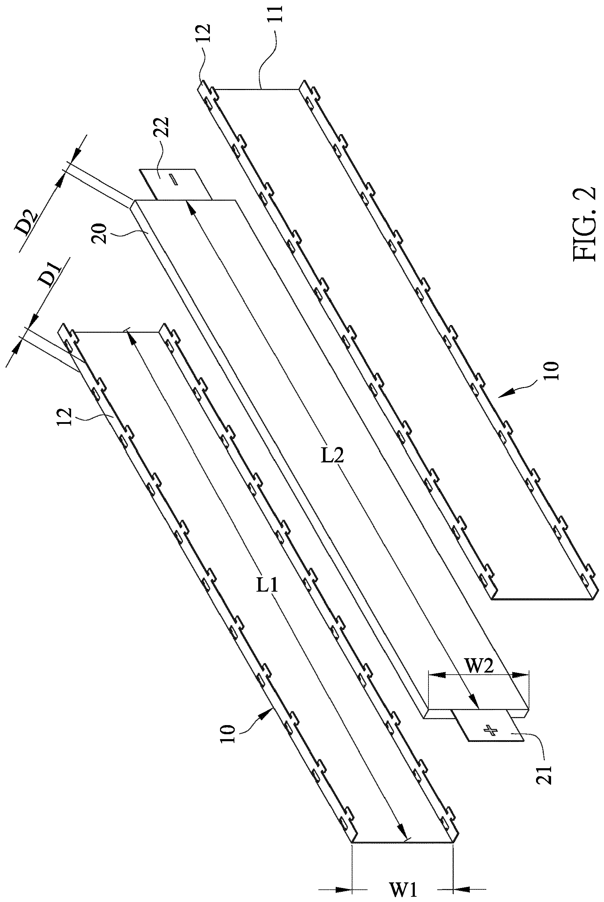

Please refer to FIGS. 1-2. In the FIGS. 1-2, only one battery cell 10 is sandwiched between two heat dissipating sheets 10, but it is only one illustrative embodiment. The battery cell 20 is the basic electrochemical battery to perform charging and discharging. The battery cell 20 is fully packed and with positive and negative electrodes inside. The two sides of the battery cell 20 extending the positive tab 21 and the negative tab 22 to connect and output the electricity. The battery cell 20 is generally in the shape of a thin rectangular shape. The size of the heat dissipating body 11 is not greater than the size of the battery cell 20, including the lengths of the positive tab 21 and the negative tab 22, for dissipation and support. Preferably, the length L1 of the heat dissipating body 11 is substantially equal to the length L2 of the battery cell 20, excluding the lengths of the positive tab 21 and the negative tab 22. The width W1 of the heat dissipating body 11 is slightly greater than the width W2 of the battery cell 20. The extended distance D1 of the connecting portions 12 of the heat dissipating body 11 is slightly greater than the thickness D2 of the battery cell 20, i.e. D1 > D2. After the battery cell 20 is clamped by the heat dissipating sheet 10, the connecting portions 12 is clamped on the upper and lower sides of the battery cell 20. The front and rear sides of the battery cell 20 are clamped and fixed by the two heat dissipating sheets 10. Therefore, the battery cell 20 is fully covered by the heat dissipating sheets 10 to provide the structural protection. The battery cell 20 is fully packed and isolated from the outside. For example, an aluminum foil bag can be utilized to form the soft pack battery cell. Moreover, the battery cell 20 may have the length L2 greater than the width W2.

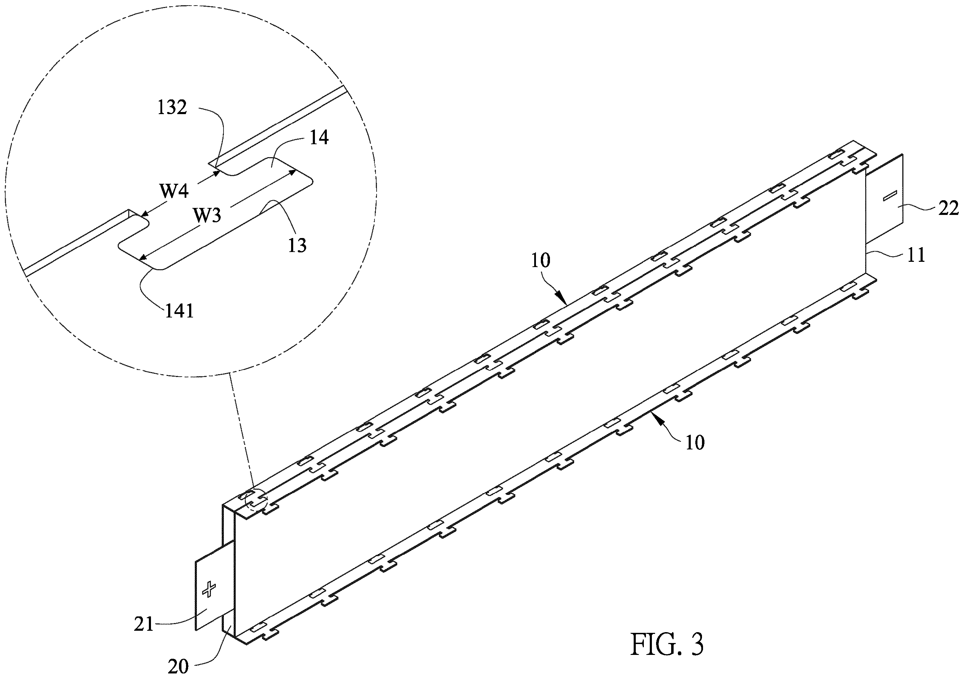

During assembling, referring to FIGS. 1-3, the fixing tabs 14 of the heat dissipating sheet 10 is clamped to the fixing notch 13 of the adjacent heat dissipating sheet 10. The battery cell 20 is fully covered therebetween to provide structural protection and support. The battery cell 20 are directly contacted to the heat dissipating sheets 10 in the entire surfaces on both sides to improve the thermal conductive and heat dissipating effects. When clamping, the fixing tab head 141 of the fixing tab 14 will clamp to the fixing notch head 131 of the fixing notch 13, and the fixing tab neck 142 will clamp to the fixing notch neck 132 to make the fixing be firm. To avoid the engagement relationship being disengaged due to external impact or shaking, the maximum width W3 of the fixing tab head 141 of the fixing tab 14 is at least 20% greater than a width W4 of the fixing notch neck 132 of the fixing notch 13. Therefore, even when the external impact or shaking is occurred, the fixing tab 14 and the fixing notch 13 can still maintain a good clamping relationship. Furthermore, the gap after assembly between the fixing tab 14 and the fixing notch 13 can be less than 1% of the width W4 of the fixing notch neck 132. The clamping relationship between the fixing tab 14 and the fixing notch 13 is more firm.

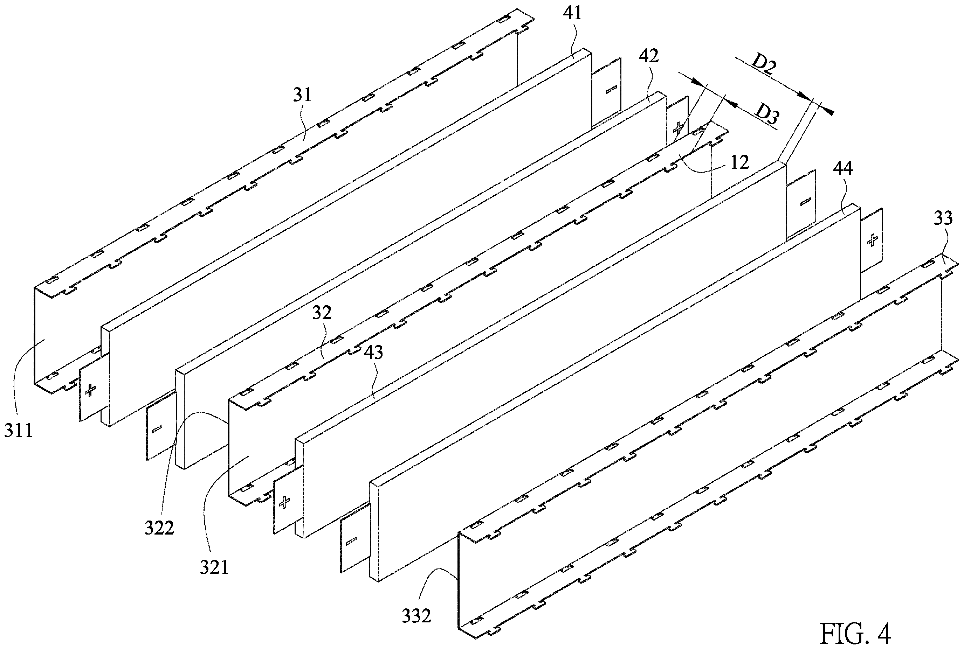

In the above embodiment, each one battery cell 20 is sandwiched by two heat dissipating sheets 10 to achieve optimized thermal conductive and heat dissipating effects. However, due to the heat dissipating sheet 10 is with certain volume, the whole energy density per unit will be decreased. Therefore, please refer to FIG. 4, two battery cells 41, 42 are disposed between the first heat dissipating sheet 31 and the second heat dissipating sheet 32. Another two battery cells 43, 44 are disposed between the second heat dissipating sheet 32 and the third heat dissipating sheet 33. After clamping, the battery cell 41 contacts with the inner surface 311 of the first heat dissipating sheet 31. The battery cell 42 contacts with the outer surface of the second heat dissipating sheet 32. The battery cell 43 contacts with the inner surface 321 of the second heat dissipating sheet 32. The battery cell 44 contacts with the outer surface 332 of the third heat dissipating sheet 33. In this way, it is still ensured that at least one surface of each battery cell 41-44 is in contact with at least one heat dissipating sheets, the first heat dissipating sheet 31, the second heat dissipating sheet 32 and the third heat dissipating sheet 33, to maintain a good heat dissipation effect. It can also increase the energy density of the overall structure due to the reduction in number of the heat dissipating sheets 10. In order to ensure that the heat dissipating sheets 10 can still engage with each other well, as shown in the figure, the extending distance D3 of the connecting portion 12 of the heat dissipating sheets 10 in this embodiment has to be slightly greater than the thickness D2 of the two battery cells 20, i.e. D3 > (D2 *2). The engagement relationships are the same with the above-mentioned embodiment. The repeated description is omitted.

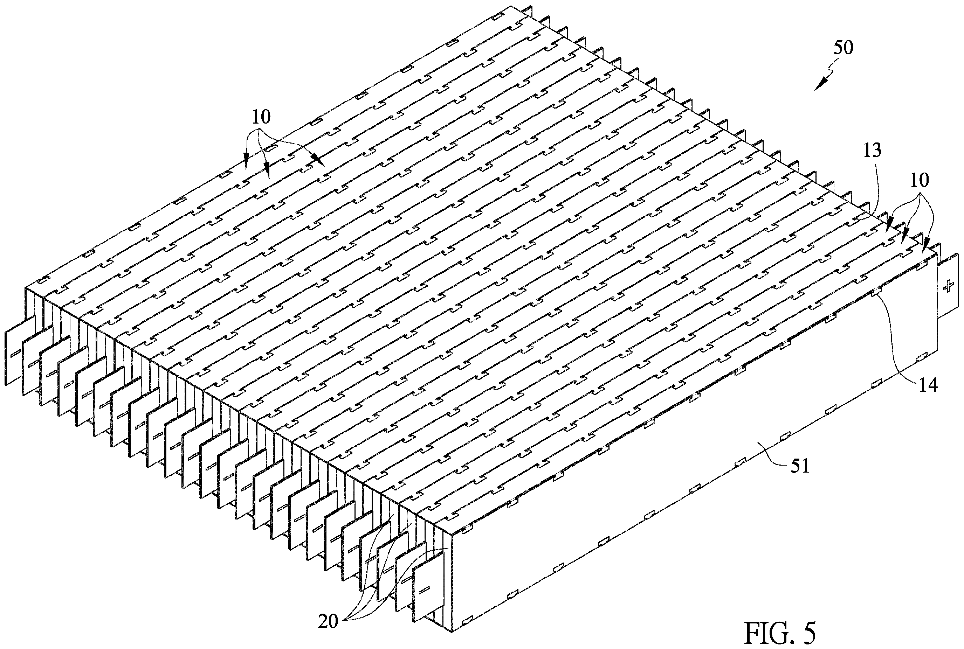

Therefore, please refer to FIG. 5, the invention discloses the composite battery assembly structure 50, including a plurality of battery cells 20 and a plurality of heat dissipating sheets 10. Single one battery cell 20 is sandwiched between two adjacent heat dissipating sheets 10 to maintain the optimized heat dissipation effect. Alternatively, multiple battery cells, such as the two battery cells 20 mentioned above, are sandwiched between two adjacent heat dissipating sheets 10 to provide a higher energy density per unit volume or unit weight compared to clamping a single battery cell 20. The heat dissipating sheets 10 are clamped and engaged with each other by the aforementioned fixing tabs 14 and the fixing notches 13. This engaging structure is firmly fixed, and incorporated with the strength of the material of the heat dissipating sheets 10, the structural strength of the overall composite battery assembly structure 50 can be improved.

In addition, since it is not necessary to further connect the heat dissipating sheets 10 in the extreme end of the stack, a cover plate 51 with a plane-shaped is utilized. The fixing tabs 14 of the adjacent heat dissipating sheet 10 are bent to fix the cover plate 51.

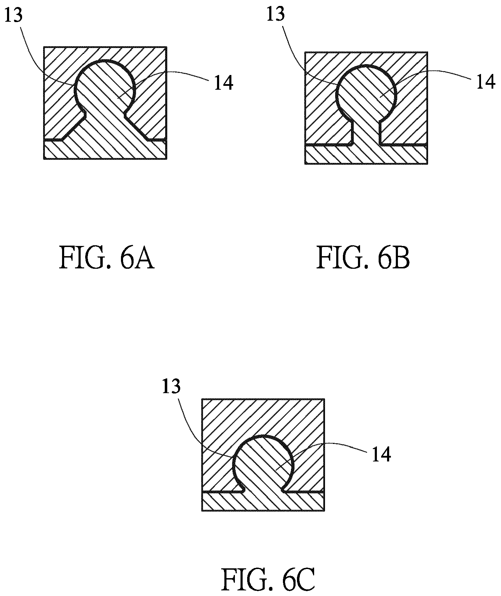

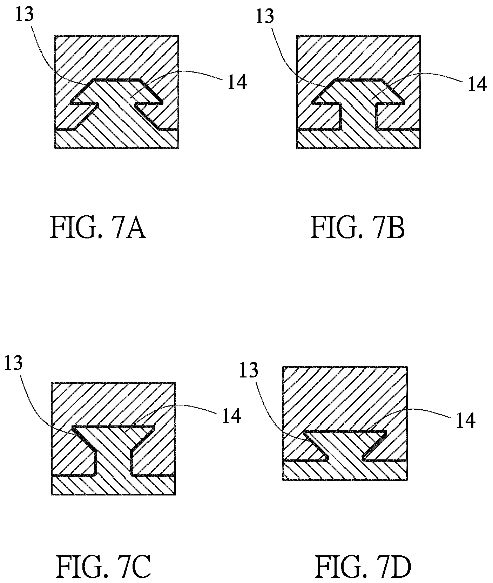

Moreover, in addition to the rectangular shaped of the fixing tab head 141 of the fixing tab 14 shown in FIG. 1, the shape of the fixing tab 14 and the fixing notch 13 can also be in other shapes, such as a circle see FIG. 6A-6C or trapezoid, see FIG. 7A-7D. Excepting for the shape of the fixing tab head, the neck can also have a non-uniform width. As shown in FIGS. 6A or 7A, the width of the neck tapers toward the head of the fixing tab. Therefore, those who skilled in this art will know that as long as the fixing tab 14 composed of a fixing tab head 141 and a fixing tab neck 142 and a corresponding fixing notch 13 composed of a fixing notch head 131 and a fixing notch neck 132, which can fasten each other, are all belong to the scope of the present invention.

Accordingly, the present invention provides a composite battery assembly structure. At least one battery cell is sandwiched the heat dissipating sheets. The heat dissipating sheets are made of high thermal conductivity material and contact with the battery cell sandwiched therebetween to enhance the heat dissipation effect and further to improve the efficiency of thermal management. The fixing tabs and the fixing notches are utilized to fix the heat dissipating sheets to improve the overall structural strength of the battery assembly. Due to the heat dissipating sheets are light in weight and thinner in thickness, a higher energy density per unit volume or unit weight is achieved. Further, the heat dissipating sheets are easy to manufacture and convenient to assemble. The manufacturing and assembly costs are significantly reduced.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A composite battery assembly structure, comprising:
a plurality of battery cells (20); and
a plurality of heat dissipating sheets (10), wherein at least one battery cell (20)
is disposed between two adjacent heat dissipating sheets (10), each heat dissipating sheet (10) comprising:
a heat dissipating body (11), directly contacting to one of the battery cell (20);
two connecting portions (12), extended in the same direction from two opposite sides of the heat dissipating body (11);
a plurality of fixing tabs (14), extended from an end of the connecting portions (12), including a fixing tab neck (142) and a fixing tab head (141) connected to the fixing tab neck (142); and
a plurality of fixing notches (13), disposed at a junction of the heat dissipating body (11) and the connecting portions (12), including a fixing notch neck (132) and a fixing notch head (131) connected to the fixing notch neck (132), wherein the fixing notches (13) are corresponding to the fixing tabs (14);
wherein two adjacent heat dissipating sheets (10) are connected to each other by the fixing tabs (14) and the fixing notches (13).

2. The composite battery assembly structure of claim 1, wherein only one battery cell (20) is disposed between two adjacent heat dissipating sheets (10) and the battery cell (20) contacts directly with the two adjacent heat dissipating sheets (10) on both sides.

3. The composite battery assembly structure of claim 1, wherein two battery cells (20) are disposed between two adjacent heat dissipating sheets (10) and each of the battery cells (20) contacts directly with respective one of the two adjacent heat dissipating sheets (10).

4. The composite battery assembly structure of claim 1, wherein a size of the heat dissipating body (11) of the heat dissipating sheet (10) is substantially equal to a size of the battery cell (20).

5. The composite battery assembly structure of claim 4, wherein the connecting portions (12) of the heat dissipating sheet (10) clamp two edges of the battery cell (20).

6. The composite battery assembly structure of claim 1, wherein a maximum width of the fixing tab head (141) of the fixing tab (14) is at least 20% greater than a width of the fixing notch neck (132) of the fixing notch (13).

7. The composite battery assembly structure of claim 1, wherein the fixing tab neck (142) is corresponding to the fixing notch neck (132) and the fixing tab head (141) is corresponding to the fixing notch head (131).

8. The composite battery assembly structure of claim 1, wherein the fixing tab head (141) has a shape including a rectangle, a circle and a trapezoid.

9. The composite battery assembly structure of claim 1, wherein the battery cells (20) are soft packed.
